# EUROPEAN PATENT SPECIFICATION

(11) **EP 1 803 692 B1**
(45) Date of publication and mention of the grant of the patent: **04.11.2009**
(21) Application number: 06009541.1
(22) Date of filing: 09.05.2006
(51) Int. Cl.: C03C 8/14, C03C 17/00

(54) **Green sheet for barrier ribs of plasma display panel**
Grünfolie zur Herstellung von Isolierstegen in einer Plasmaanzeigentafel
Feuille verte pour la préparation des nervures d'isolation dans un panneau d'affichage à plasma

(30) Priority: 29.12.2005 KR 20050132808
(43) Date of publication of application: 04.07.2007
(73) Proprietor: LG Electronics Inc., Yongdungpo-Gu Seoul 150-010 (KR)
(72) Inventor: Choi, Woong, Seoul 156-093 (KR)
(74) Representative: von Hellfeld, Axel

(56) References cited:
- EP-A1- 1 093 147
- WO-A-01/95361
- WO-A-2004/012854
- US-A1- 2003 073 564
- US-A1- 2004 246 204
- US-A1- 2006 051 708
- DATABASE WPI Week 200565 Derwent Publications Ltd., London, GB; AN 2005-636264 XP002426627 & KR 2005 032 261 A (ORION PDP CO LTD) 7 April 2005 (2005-04-07)

## Description

### Field of the Invention

The present invention relates to a green sheet for barrier ribs of plasma display panel.

### Description of the Related Art

Plasma display panels (PDPs) are flat panel display devices that can display images or information by using the light-emitting phenomenon of plasma discharge. PDPs generally are divided into DC-types and AC-types according to the panel structure and driving method.

PDPs generate visible ray obtained from the energy difference when ultraviolet ray, which is generated by the plasma discharge of a gas (such as He, Xe, etc.) provided in each cell, excites a phosphor lining in the cell, which emits a visible photon when returning to the ground state.

The above mentioned PDPs have advantages such as easy manufacturing, simple structure, high brightness, high luminous efficacy, memory capacity, and a wide viewing angle over 160°. PDPs also can be used for wide screens of 40 inches or more.

Hereinafter, the basic structure of a PDP will be described. The structure of a PDP generally includes an upper substrate and an oppositely disposed lower substrate thereto, barrier ribs, and cells defined by the two substrates and barrier ribs. Transparent electrodes are disposed on the upper substrate, and bus electrodes are disposed on the transparent electrodes in order to reduce the resistance of the transparent electrodes. Address electrodes, also called data electrodes, are formed on the lower substrate.

The cells divided by the barrier ribs are lined with phosphors. An upper dielectric layer is disposed on the upper substrate to cover the transparent electrodes and the bus electrodes, and a lower dielectric layer is disposed on the lower substrate as to cover the address electrodes. A protection layer, generally consisting of magnesium oxide, is disposed on the upper dielectric layer.

The barrier ribs are present to maintain a discharge distance between the upper substrate and the lower substrate, and to prevent electrical, optical cross-talks between the adjacent cells as well. The formation of the barrier ribs is one of the most important steps in the manufacturing process of PDPs for good display quality and efficiency. Therefore, there has been a variety of research on the formation of the barrier ribs as the size of panels grows larger and larger.

WO-A2-2004/012854 discloses a method for preparing a photosensitive barrier rib paste for use in a plasma display panel, comprising the steps of providing a barrier rib powder having its surface treated with nano-size silica particles by mixing, baking and pulverizing a barrier rib powder, which includes glass frit and a ceramic powder, with nano-size (5 to 200 nm) fumed silica, and forming the photosensitive barrier rib paste by mixing the barrier rib powder having its surface treated with the nano-size silica particles with a photosensitive vehicle, the photosensitive vehicle including binder polymer, solvent, photoinitiator, additives, and at least one material selected from the group consisting of multifunctional monomer and multifunctional oligomer.

Generally, material for forming the barrier ribs is used a paste mixing a glass powder used about more than 50 wt% of lead oxide (PbO) and organic. But, the lead oxide is known for harmful material to a body and environment. Thus, additional environment equipment needs in production and use of the glass powder so that process efficiency is caused to decrease, and the manufacturing cost is caused to increase. Furthermore, in case rate of the lead oxide is increased after the sintering, bubble is increased in the barrier ribs because viscosity flowing is great when the barrier ribs sinters.

### SUMMARY OF THE INVENTION

It is an object of the present invention to provide a green sheet for barrier ribs of plasma display panel using Pb-free glass material. In particular, the present invention provides a green sheet for barrier ribs as set forth in claim 1. Preferred embodiments are set forth in claims 2 to 6.

A composition of paste for use in barrier ribs in PDPs described herein comprises 30 wt% to 60 wt% of a Pb-free glass powder, 1 wt% to 10 wt% of a filler, 10 wt% to 30 wt% of a binder, 1 wt% to 8 wt% of a plasticizer, 0.1 wt% to 3 wt% of a dispersing agent, and 15 wt% to 35 wt% of a solvent.

A green sheet for use in barrier ribs in PDPs described herein comprises a base film, a first film forming layer formed by coating a first paste composition including 30 wt% to 60 wt% of a Pb-free glass powder, 1 wt% to 10 wt% of a filler, 10 wt% to 30 wt% of a binder, 1 wt% to 8 wt% of a plasticizer, 0.1 wt% to 3 wt% of a dispersing agent and 15 wt% to 35 wt% of a solvent onto the base film, and a second film forming layer formed by coating a second paste composition including 30 wt% to 60 wt% of a Pb-free glass powder, 1 wt% to 10 wt% of a filler, 10 wt% to 30 wt% of a binder, 1 wt% to 8 wt% of a plasticizer, 0.1 wt% to 3 wt% of a dispersing agent and 15 wt% to 35 wt% of a solvent onto the first film forming layer. Etching rate of the second paste composition is different from that of the first paste composition.

Another green sheet for use in barrier ribs in PDPs described herein comprises a base film, a first film forming layer including 40 wt% to 70 wt% of a Pb-free glass powder, 1 wt% to 10 wt% of a filler, 10 wt% to 40 wt% of a binder, 1 wt% to 10 wt% of a plasticizer and 0.1 wt% to 5 wt% of a dispersing agent, and formed onto the base film, and a second film forming layer including 40 wt% to 70 wt% of a Pb-free glass powder, 1 wt% to 10 wt% of a filler, 10 wt% to 40 wt% of a binder, 1 wt% to 10 wt% of a plasticizer and 0.1 wt% to 5 wt% of a dispersing agent, and formed onto the first film forming layer. Etching rate of the second film forming layer is different from that of the first film forming layer.

A plasma display panel described herein comprises a lower substrate and a upper substrate oppositely disposed each other, address electrodes formed on the lower substrate, and discharge electrodes formed on the upper substrate, barrier ribs disposed in the area between the lower substrate and the upper substrate to divide a plurality of discharge cells, and a red, green and blue fluorescent substance layer formed in the discharge cell divided by the barrier ribs. The barrier ribs are formed by a paste composition comprising 30 wt% to 60 wt% of a Pb-free glass powder, 1 wt% to 10 wt% of a filler, 10 wt% to 30 wt% of a binder, 1 wt% to 8 wt% of a plasticizer, 0.1 wt% to 3 wt% of a dispersing agent and 15 wt% to 35 wt% of a solvent.

With the composition of paste, the green sheet for barrier ribs of plasma display panel, and plasma display panel using the same described herein, the barrier ribs formed by Pb-free glass powder may more harmless than with the related art.

### BRIEF DESCRIPTION OF THE DRAWINGS

These and other features, aspects and advantages of the present invention will become better understood with regard to the following description, appended claims, and accompanying drawings where:

Fig. 1 is a cross-sectional view of a plasma display panel;

Fig. 2 is a cross-sectional view of a green sheet for barrier ribs in PDPs according to a preferred embodiment of the present invention; and

Fig. 3A - 3F are cross-sectional views illustrating the steps of forming the barrier ribs of PDP of Fig. 1.

### DETAILED DESCRIPTON OF THE INVENTION

Further scope of applicability of the present invention will become apparent from the detailed description given hereinafter.

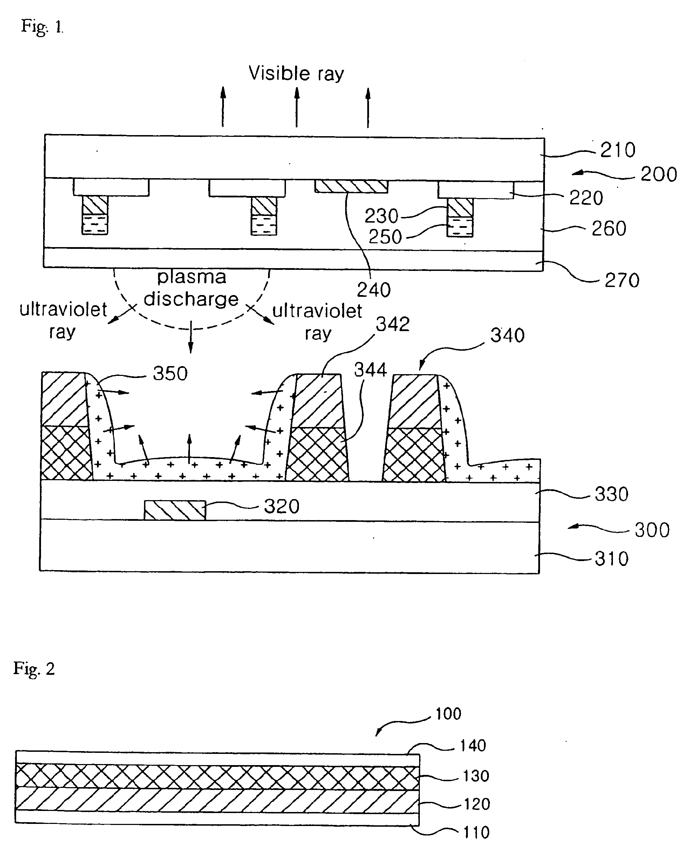

Fig. 1 is a cross-sectional view of a plasma display panel described herein.

Fig. 1 shows that the structure of the PDP is divided into an upper plate 200 and a lower plate 300. In the upper plate 200, transparent electrodes 220, bus electrodes 250, a first and second black matrix 230 and 240, an upper dielectric layer 260, and a protection layer 270 are formed on the lower side of a glass substrate 210 (hereinafter, referred to as "upper substrate").

The transparent electrodes 220 are made of transparent conductive material such as indium tin oxide (ITO) or indium zinc oxide (IZO) to transmit the light generated from the discharge cells.

The bus electrodes 250 are present on the transparent electrodes 220 in order to reduce the line resistance of the transparent electrodes 220. The bus electrodes 250 may be made of silver (Ag) paste having a high conductivity. Since the bus electrodes 250 are generally made of a material with high electrical conductivity, they may reduce the driving voltage of the transparent electrodes 220 having a relatively low electrical conductivity.

The first black matrix 230 are present as a very thin layer between the transparent electrodes 220 and the bus electrodes 250, thereby to allow an electric current to pass through between the transparent electrodes 220 and the bus electrodes 250 and to enhance contrast on the PDP.

The second black matrix 240 is disposed between discharge cells to absorb outside light and inside transmitting light between adjacent discharge cells, thereby to enhance contrast. And the second black matrix 240 also serves to divide or compart the discharge cells.

The upper dielectric layer 260, which directly contacts the bus electrodes 250 made of a metallic material, may be made of PbO-based glass in order to avoid chemical reactions with the bus electrodes 250. The upper dielectric layer 260 restricts discharge current to maintain GLOW discharge, and the electric charges generated at the time of plasma discharge are deposited on the upper dielectric layer 260.

The protection layer 270 prevents damage of the upper dielectric layer 260 caused by sputtering at the time of plasma discharge, and increases the discharge efficiency of the secondary electrons. The protection layer 270 may be made of magnesium oxide (MgO).

In the lower plate 300 of the PDP, a glass substrate 310 (hereinafter, referred to as "lower substrate"), and address electrodes 320, a lower dielectric layer 330, barrier ribs 340, and a phosphor layer 350 are disposed on the upper surface of the lower substrate 310.

The address electrodes 320 are positioned at about the center of each discharge cell. The address electrodes 320 may have a line width of about 70 to 80 µm.

The lower dielectric layer 330 is disposed over the entire surface of the lower substrate 310 and the address electrodes 320, and the lower dielectric layer 330 protects the address electrodes 320.

The barrier ribs 340 are positioned on top of the lower dielectric layer 330 spaced at a predetermined distance from the address electrodes 320, and the barrier ribs 340 are formed to be longer in the perpendicular direction.

The barrier ribs 340 have a double-layered structure consisting of a lower barrier rib 344 and an upper barrier rib 342. The cross-sectional shape of the barrier ribs 340 may be a rectangular wherein the upper barrier rib 342 has the same width as the lower barrier rib 344. Alternatively, the cross-sectional shape of the barrier ribs 340 may be a trapezoid wherein the upper barrier rib 342 is narrower in width than the lower barrier rib 344.

The barrier ribs 340 are present to maintain the discharge distance and prevent electrical and optical interference between adjacent discharge cells.

The phosphor layer 350 is formed on both sides of the barrier ribs 340 and the upper surface of the lower dielectric layer 330. The phosphor layer 350 is excited by the ultraviolet ray generated at the time of plasma discharge to generate red (R), green (G) or blue (B) visible ray.

Hereinafter, the light emitting mechanism of a PDP will be described in detail.

Under a predetermined voltage (within a voltage margin) between the transparent electrode 220 and the bus electrode 250, applying to the address electrodes 320 an additional voltage sufficient to create plasma, generate a plasma between the transparent electrode 220 and the bus electrode 250. A certain amount of free electrons exists in the gas, and a force (F = q ·E) is exerted to the free electrons when an electrical field is applied to the gas.

If the force-exerted electrons obtain energy (first ionization energy) sufficient to remove electrons in the outermost orbit, they ionize the gas, and the ions and electrons created in the gas move to both electrodes by electromagnetic force. Particularly, secondary electrons are generated when the ions collide with the protection layer 250, and the secondary electrons help to create the plasma.

Thus, a high voltage creates an initial discharge, but once a discharge is initiated, a lower voltage is used as the electron density increases.

The gas provided in the cells of the PDP is generally an inert gas, such as Ne, Xe, He, etc. Particularly, when Xe is under a quasi stable state, an ultraviolet ray with a wavelength of between about 147 and 173 nm is generated and applied to the phosphor layer 350 to emit red, green or blue visible ray.

The color of visible ray emitted from each discharge cell is determined according to the kind of phosphor lining the discharge cell, and thus each discharge cell becomes a sub-pixel representing red, green or blue color.

The color of each discharge cell is controlled by combination of light emitted from the three sub-pixels. In case of this exemplary PDP, it is controlled at the time the plasma is generated.

The visible ray generated as described above is emitted to the outside of the cell through the upper substrate 210.

Hereinafter, the process of manufacturing the lower plate 300, particularly a composition for use in manufacturing the barrier ribs 340 and the manufacturing process thereof will be described in detail.

Fig. 2 is a cross-sectional view of a green sheet for forming barrier ribs in PDPs according to a preferred embodiment of the present invention.

Referring to Fig. 2, a green sheet 100 is a sheet adapted to forming a constituent element of the PDP, particularly the barrier ribs 340. The green sheet 100 comprises a first film-forming layer 120 and a second film-forming layer 130, which are formed by applying pastes onto a base film 110 and drying it thereafter. A protection film 140 is disposed on a surface of the second film-forming layer. The base film 110 and the protection layer 140 are releasable from the film-forming layers 120 and 130.

The base film 110 is a resin film, preferably having flexibility as well as thermal resistance and solvent resistance. The flexibility of the base film 110 helps to apply the pastes on the base film 110 so that the film-forming layers 120 and 130 may be made with a uniform film thickness. Furthermore, the flexibility of the base film 110 allows the film-forming layers 120 and 130 to be stored in a roll type.

The first and second film-forming layers 120 and 130 are preform layers to become the barrier ribs 340 through following processes. The paste, which is applied to the base film 110 for forming the first and second film-forming layer 120 and 130, may contain a glass powder, a filler powder, a solvent, a dispersing agent, a plasticizer and a binder. In addition, the paste may further contain an additive to improve leveling property and application property.

The paste for the barrier ribs may comprise 30 wt% to 60 wt% of a Pb-free glass powder, 1 wt% to 10 wt% of a filler, 10 wt% to 30 wt% of a binder, 1 wt% to 8 wt% of a plasticizer, 0.1 wt% to 3 wt% of a dispersing agent, and 15 wt% to 35 wt% of a solvent.

Desirably, the paste may further comprise less than about 2wt% of an antifoaming agent and less than 2wt% of a leveling agent.

The glass powder is a Pb-free glass powder. The Pb-free glass powder may be used a mixture of ZnO, B₂O₃ and SiO₂ or a mixture of ZnO, B₂O₃ and P₂O₅. The Pb-free glass powder can be treated at relatively low temperature (about less than 500°C).

And, the filler may be at least one selected from the group consisting of Al₂O₃, ZnO, TiO₂ and a mixture thereof.

The binder may be at least one selected from the group consisting of a cellulose based material, vinyl based material, methacrylic based material, acrylic based material and a mixture thereof.

The plasticizer may be at least one selected from the group consisting of a phthalate based material, glycol based material, azelate based material and a mixture thereof.

The solvent may be at least one selected from the group consisting of methyl ethyl ketone, ethanol, xylene, toluene, PGME, MEK, IPA, acetone, trichloroethane, butanol, methyl Isobuthyl ketone (MIBK), ethyl acetate (EA), butyl acetate, cyclo hexanone, water, propylene glycol mono methyl ether and a mixture thereof

The dispersing agent may be at least one selected from the group consisting of a polyamine amide based material, phosphoric acid ester based material, polyisobutylene, oleic acid, stearin acid, fish oil, ammonium salt of a polycarboxylic acid, sodium carboxymethyl and a mixture thereof.

The pastes for forming the first and second film-forming layer 120 and 130 are prepared as the foregoing description. However, it is noted that a first paste for forming the first film-forming layer 120 and a second paste for forming the second film-forming layer 130 should not be mixed while applying the pastes over the base film 110. For this, the first paste for forming the first film-forming layer 120 must be higher in viscosity than the second paste for forming the second film-forming layer 130. It is because the pastes may be mixed each other due to the same flowability of the two pastes where the two pastes have the same viscosity.

Furthermore, the first paste for forming the first film-forming layer 120 must be different in density from the second paste for forming the second film-forming layer 130.

In addition, the first film-forming layer 120 and the second film-forming layer 130 showed a difference in etching rate under an identical condition, wherein the first film-forming layer 120 was lower in the etching rate than the second film-forming layer 130. And the inventors of the present invention found that the difference of content ratio of the filler between the first paste and the second paste provides such difference in the etching rate.

The green sheet 100 according to the present invention is prepared by applying the first paste and the second paste over the base film 110, and then drying those.

After completing the dry process of the green sheet, the first film-forming layer 120 and the second film-forming layer 130 may comprise 40 wt% to 70 wt% of a Pb-free glass powder, 1 wt% to 10 wt% of a filler, 10 wt% to 40 wt% of a binder, 1 wt% to 10 wt% of a plasticizer and 0.1 wt% to 5 wt% of a dispersing agent, and formed onto the base film. Etching rate of the second film forming layer must be different from that of the first film forming layer.

Desirably, the first film-forming layer 120 and the second film-forming layer 130 may further comprise less than 2wt% of an antifoaming agent, less than 2wt% of a leveling agent and less than 1wt% of a solvent.

Like this, composition rate of the first and second paste is different from that of the first film-forming layer 120 and the second film-forming layer 130. Because most of the material Like the solvent, etc. is evaporated as drying the first and second paste.

Hereinafter, result of a trial test evaluating character of the green sheet 100 will be described in detail.

Table 1 is showing composition rate of the first and the second pastes for forming the green sheet according to each of the examples.

In the test, the glass powder uses Pb-free glass powder, the filler uses mixture of oxide crystalloid, the binder uses methacrylic based material or acrylic based material, the dispersing agent uses polyamine amide based material, the plasticizer uses phthalate based material, glycol based material or azelate based material, the antifoaming agent uses ethyl hexanone, the leveling agent uses siloxane based material or acryl based material, and the solvent uses xylene, toluene, PGME, MEK, acetone, cyclo hexanone, IPA, ethyl acetate (EA) or butyl acetate.

**[Table 1]**

| Content (wt%) | Glass powder | Filler in first layer | Filler in second layer | Binder | Dispersing agent | Plasticizer | Antifoaming agent | Leveling agent | Solvent |
|---|---|---|---|---|---|---|---|---|---|
| Example 1 | 36 | 6 | 4 | 24 | 1.5 | 4 | 0 | 0 | 24.5 |
| Example 2 | 40 | 7 | 5 | 18 | 1.3 | 4 | 0.1 | 0.1 | 24.5 |
| Example 3 | 51 | 5 | 6 | 16.7 | 1 | 1.8 | 1 | 0 | 17.5 |
| Example 4 | 48 | 8 | 6 | 14.8 | 1.3 | 2.7 | 0 | 1 | 18.2 |
| Example 5 | 46 | 2 | 6 | 10.1 | 0.5 | 6.8 | 0 | 0 | 28.6 |

In Table 1, The first and second pastes of Example 1 comprises 36 wt% of the glass powder, 24 wt% of the binder, 4 wt% of the plasticizer, 1.5 wt% of the dispersing agent, and 24.5 wt% of the solvent. But, the first paste comprises 6 wt% of the filler, and the second paste comprises 4 wt% of the filler.

The first and second pastes of Example 2 comprises 40 wt% of the glass powder, 18 wt% of the binder, 4 wt% of the plasticizer, 1.3 wt% of the dispersing agent, 0.1 wt% of the antifoaming agent, 0.1 wt% of the leveling agent, and 24.5 wt% of the solvent. But, the first paste comprises 7 wt% of the filler, and the second paste comprises 5 wt% of the filler.

The first and second pastes of Example 3 comprises 51 wt% of the glass powder, 16.7 wt% of the binder, 1.8 wt% of the plasticizer, 1 wt% of the dispersing agent, 1 wt% of the antifoaming agent, and 17.5 wt% of the solvent. But, the first paste comprises 5 wt% of the filler, and the second paste comprises 6 wt% of the filler.

The first and second pastes of Example 4 comprises 48 wt% of the glass powder, 14.8 wt% of the binder, 2.7 wt% of the plasticizer, 1.3 wt% of the dispersing agent, 1 wt% of the leveling agent, and 18.2 wt% of the solvent. But, the first paste comprises 8 wt% of the filler, and the second paste comprises 6 wt% of the filler.

The first and second pastes of Example 5 comprises 46 wt% of the glass powder, 10.1 wt% of the binder, 6.8 wt% of the plasticizer, 0.5 wt% of the dispersing agent, and 28.6 wt% of the solvent. But, the first paste comprises 2 wt% of the filler, and the second paste comprises 6 wt% of the filler.

In above the trial test, etching rate of the first and second pastes may be different by providing the content rate of the filler between the first and the second pastes differently.

Like this, the green sheets make by coating the first and second pastes according to Example 1 to Example 5 on the base film, and then drying those. Table 2 will be showing content rate of the green sheets according to each of Examples after completely drying.

**[Table 2]**

| Content (wt%) | Glass powder | Filler in first layer | Filler in second layer | Binder | Dispersing agent | Plasticizer | Antifoaming agent | Leveling agent | Solvent |
|---|---|---|---|---|---|---|---|---|---|
| Example1 | 47.7 | 7.9 | 5.3 | 31.2 | 2 | 5.3 | 0 | 0 | 0.4 |
| Example2 | 46.8 | 8.2 | 5.8 | 32.1 | 1.5 | 4.6 | 0.1 | 0.1 | 0.5 |
| Example3 | 61.8 | 6.1 | 7.3 | 20 | 1 | 2.2 | 1.2 | 0 | 0.3 |
| Example4 | 58.6 | 9:8 | 7.3 | 18.1 | 1.6 | 3 | 0 | 1 | 0.4 |
| Example5 | 64.4 | 2.8 | 8.4 | 14 | 0.7 | 9.1 | 0 | 0 | 0.3 |

In Table 2, the first and second film-forming layers of Example 1 comprises 47.7 wt% of the glass powder, 31.2 wt% of the binder, 5.3 wt% of the plasticizer, 2 wt% of the dispersing agent, and 0.4 wt% of the solvent. But, the first film-forming layer comprises 7.9 wt% of the filler, and the second film-forming layer comprises 5.3 wt% of the filler.

The first and second film-forming layers of Example 2 comprises 46.8 wt% of the glass powder, 32.1 wt% of the binder, 4.6 wt% of the plasticizer, 1.5 wt% of the dispersing agent, 0.1 wt% of the antifoaming agent, 0.1 wt% of the leveling agent, and 0.5 wt% of the solvent. But, the first paste film-forming layer 8.2 wt% of the filler, and the second film-forming layer comprises 5.8 wt% of the filler.

The first and second film-forming layers of Example 3 comprises 61.8 wt% of the glass powder, 20 wt% of the binder, 2.2 wt% of the plasticizer, 1 wt% of the dispersing agent, 1.2 wt% of the antifoaming agent, and 0.3 wt% of the solvent. But, the first film-forming layer comprises 6.1 wt% of the filler, and the second film-forming layer comprises 7.3 wt% of the filler.

The first and second film-forming layers of Example 4 comprises 58.6 wt% of the glass powder, 18.1 wt% of the binder, 3 wt% of the plasticizer, 1.6 wt% of the dispersing agent, 1 wt% of the leveling agent, and 0.4 wt% of the solvent. But, the first film-forming layer comprises 9.8 wt% of the filler, and the second film-forming layer comprises 7.3 wt% of the filler.

The first and second film-forming layers of Example 5 comprises 64.4 wt% of the glass powder, 14 wt% of the binder, 9.1 wt% of the plasticizer, 0.7 wt% of the dispersing agent, and 0.3 wt% of the solvent. But, the first film-forming layer comprises 2.8 wt% of the filler, and the second film-forming layer comprises 8.4 wt% of the filler.

As described above, both the first and the second film-forming layer 120 and 130 may be almost not included the solvent.

Table 3 is showing the result valuing character of the green sheets according to Example 1 to Example 5. The valuation basis is intensity, elongation, viscosity, content of residual solvent, withstanding voltage, fineness of sintering, and possibility of forming two-layers.

**[Table 3]**

| | Intensity (gf/mm2) | Elongation (%) | Viscosity (gf) | Content of residual solvent (%) | Withstanding voltage (kV) | Fineness of sintering | Forming two-layers |
|---|---|---|---|---|---|---|---|
| Example1 | 37 | More 3000 | 150 | Less 1 | More 4 | Good | Possible |
| Example2 | 53 | 2532 | 115 | Less 1 | More 4 | Good | Possible |
| Example3 | 95 | 1340 | 89 | Less 1 | More 4 | Good | Possible |
| Example4 | 78 | 2036 | 102 | Less 1 | More 4 | Good | Possible |
| Example5 | 53 | 301 | 120 | Less 1 | More 4 | good | Possible |

As shown in Table 3, the green sheets according Example 1 to Example 5 is good at intensity, elongation and viscosity, and is low of content of residual solvent, and is high withstanding voltage. Also, fineness of sintering is good, and the first and second film-forming layers are not mixed and maintained the two-layers.

Like this, the green sheet using the paste described herein is satisfied with forming the barrier ribs of PDPs.

Hereinafter, a method of manufacturing barrier ribs in PDPs by using the above green sheet 100 will be described.

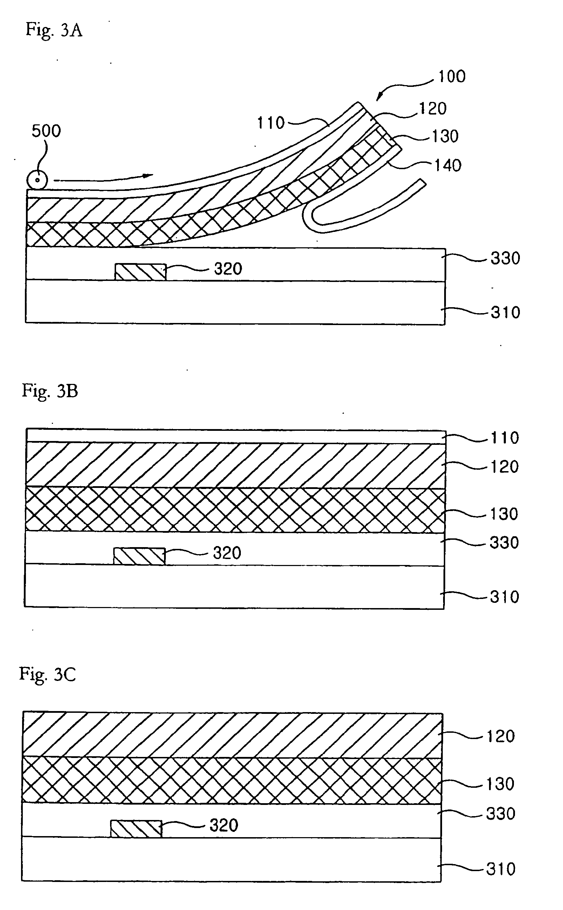

Fig. 3A - 3F are cross-sectional views illustrating the steps of manufacturing barrier ribs of the PDP of Fig. 1.

As shown in Fig. 3A, the green sheet 100 is transferred to the lower substrate 310 with the address electrodes 320 and the lower dielectric layer 330 disposed thereon. The address electrodes 320 and the lower dielectric layer 330 may be formed on the lower substrate 310 by sputtering, ionic plating, chemical deposition, electro deposition and the like.

Here, the protection film 140 is released from the second film-forming layer 130 of the green sheet 100, and then the second film-forming layer 130 is overlaid with the lower substrate 310 so that a surface of the second film-forming layer 130 and a surface of the lower dielectric layer 330 are contacted each other. The direction of transferring the green sheet 100 is preferably perpendicular to the direction of the address electrodes 320.

Subsequently, a movable heat roller 500 is moved and rotated on the green sheet 100 for thermo-compression so that the first and the second film-forming layers 120 and 130 on the base film 110 may be transformed onto the lower substrate 310 as shown in Fig. 3B.

In continuation, as shown in Fig. 3C, the base film 110 is released from the first film-forming layer 120.

Then, thermal treatment is performed to the lower substrate 310 with the first and second film-forming layers 120 and 130 thereon at a high temperature over 500°C, thereby to sinter the first and second film-forming layers 120 and 130.

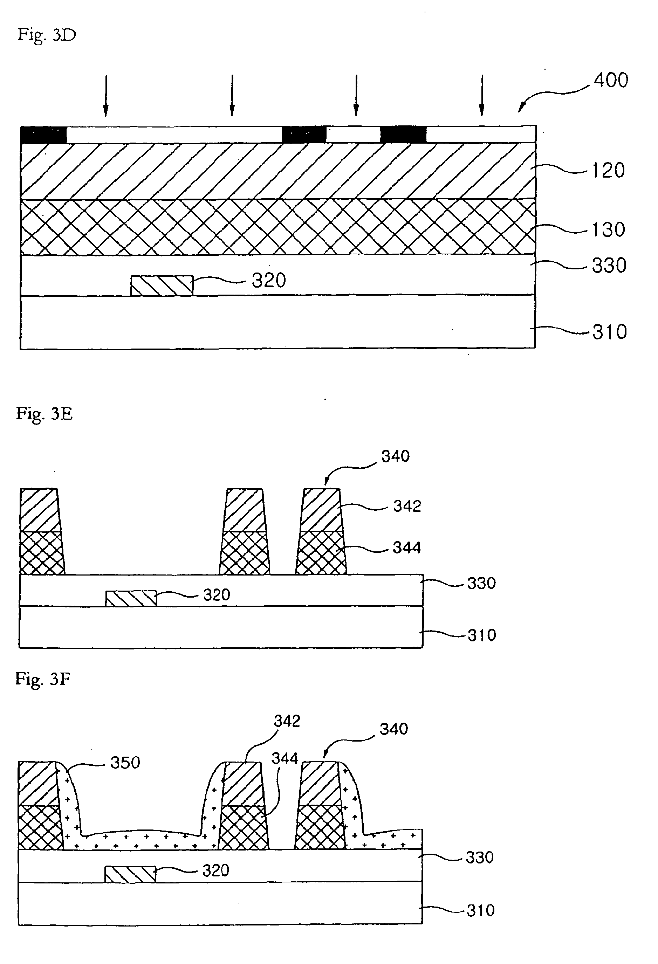

Subsequently, as shown in Fig. 3D, a mask 400 with openings therein is disposed on the first and the second film-forming layers 120 and 130 over the lower substrate. The openings of the mask 400 are defined in areas except areas for the barrier ribs 340 to be disposed.

And then, the lower substrate 310 with the mask 400 thereon is treated with an etching agent, thereby to remove the corresponding area of the fist and the second film-forming layers 120 and 130 to the openings of the mask 400, and thereby to shape the barrier ribs 340 consisting of a upper rib portion 342 and a lower rib portion 344 as shown in Fig. 3E.

In the etching process, the first film-forming layer 120 and the second film-forming layer 130 have different etching rates due to the difference of content ratio of the filler. And the content ratio should be designed so that the second film-forming layer 130 has a higher etching rate than the first film-forming layer 120. Under such condition, the first film-forming layer 120 is less damaged due to a side etching while the second film-forming layer 130 undergoes etching, and thus a rectangular or trapezoid cross-sectional shape of the barrier ribs, which are structurally and mechanically stable, can be obtained.

Subsequently, as shown in Fig. 3F, a phosphoric material is coated inside the cells defined by the barrier ribs 340 to form the phosphor layer 350.

## Claims

1. A green sheet for barrier ribs comprising:
a base film;
a first film forming layer including 40 wt% to 70 wt% of a Pb-free glass powder, 1 wt% to 10 wt% of a filler, 10 wt% to 40 wt% of a binder, 1 wt% to 10 wt% of a plasticizer and 0.1 wt% to 5 wt% of a dispersing agent, and formed onto the base film; and
a second film forming layer including 40 wt% to 70 wt% of a Pb-free glass powder, 1 wt% to 10 wt% of a filler, 10 wt% to 40 wt% of a binder, 1 wt% to 10 wt% of a plasticizer and 0.1 wt% to 5 wt% of a dispersing agent, and formed onto the first film forming layer,
wherein the content ratio of the filler of the first film forming layer is different from the content ratio of the filler of the second film forming layer, and the etching rate of the second film forming layer is different from that of the first film forming layer.

2. The green sheet of Claim 1, further comprising a protective film formed on the second film forming layer.

3. The green sheet of Claim 1, wherein the first or the second film forming layers further comprises less than 2 wt% of an antifoaming agent, less than 2 wt% of a leveling agent and less than 1 wt% of a solvent.

4. The green sheet of Claim 1, wherein the filler is at least one selected from the group consisting of ZnO, Al₂O₃ and TiO₂.

5. The green sheet of Claim 1, wherein the binder is at least one selected from the group consisting of cellulose based material, vinyl based material, methacryl based material, acryl based material and a mixture thereof.

6. The green sheet of Claim 1, wherein the plasticizer is at least one selected from the group consisting of phthalate based material, glycol based material, azelate based material and a mixture thereof.

## Patentansprüche

1. Grünfolie für Trennrippen, umfassend:
einen Grundfilm;
eine erste filmbildende Schicht, die 40 Gew.-% bis 70 Gew.-% eines Pb-freien Glaspulvers, 1 Gew.-% bis 10 Gew.-% eines Füllstoffs, 10 Gew.-% bis 40 Gew.-% eines Bindemittels, 1 Gew.-% bis 10 Gew.-% eines Weichmachers und 0,1 Gew.-% bis 5 Gew.-% eines Dispergiermittels beinhaltet, und auf dem Grundfilm gebildet ist; und
eine zweite filmbildende Schicht, die 40 Gew.-% bis 70 Gew.-% eines Pb-freien Glaspulvers, 1 Gew.-% bis 10 Gew.-% eines Füllstoffs, 10 Gew.-% bis 40 Gew.-% eines Bindemittels, 1 Gew.-% bis 10 Gew.-% eines Weichmachers und 0,1 Gew.-% bis 5 Gew.-% eines Dispergiermittels beinhaltet, und auf der ersten filmbildenden Schicht gebildet ist,
wobei das Anteilsverhältnis des Füllstoffs der ersten filmbildenden Schicht unterschiedlich ist zu dem Anteilsverhältnis des Füllstoffs der zweiten filmbildenden Schicht, und die Ätzrate der zweiten filmbildenden Schicht unterschiedlich ist zu derjenigen der ersten filmbildenden Schicht.

2. Grünfolie nach Anspruch 1, ferner umfassend einen auf der zweiten filmbildenden Schicht gebildeten Schutzfilm.

3. Grünfolie nach Anspruch 1, wobei die erste oder die zweite filmbildende Schicht ferner weniger als 2 Gew.-% eines Antischaummittels, weniger als 2 Gew.-% eines Egalisiermittels und weniger als 1 Gew.-% eines Lösungsmittels umfasst.

4. Grünfolie nach Anspruch 1, wobei der Füllstoff wenigstens ein aus der Gruppe bestehend aus ZnO, Al₂O₃ und TiO₂ ausgewählter Füllstoff ist.

5. Grünfolie nach Anspruch 1, wobei das Bindemittel wenigstens ein aus der Gruppe bestehend aus einem Cellulose-basierten Material, Vinyl-basierten Material, Methacryl-basierten Material, Acryl-basierten Material und einer Mischung davon ausgewähltes Bindemittel ist.

6. Grünfolie nach Anspruch 1, wobei der Weichmacher wenigstens ein aus der Gruppe bestehend aus einem Phthalat-basierten Material, Glycol-basierten Material, Azelat-basierten Material und einer Mischung davon ausgewählter Weichmacher ist.

## Revendications

1. Feuille verte pour nervures barrière comprenant :
un film de base ;
une première couche de formation de film incluant 40 % en poids à 70 % en poids d'une poudre de verre sans Pb, 1 % en poids à 10 % en poids d'une charge, 10 % en poids à 40 % en poids d'un liant, 1 % en poids à 10 % en poids d'un plastifiant et 0,1 % en poids à 5 % en poids d'un agent de dispersion, et formée sur le film de base ; et
une deuxième couche de formation de film incluant 40 % en poids à 70 % en poids d'une poudre de verre sans Pb, 1 % en poids à 10 % en poids d'une charge, 10 % en poids à 40 % en poids d'un liant, 1 % en poids à 10 % en poids d'un plastifiant et 0,1 % en poids à 5 % en poids d'un agent de dispersion, et formée sur la première couche de formation de film,
dans laquelle le rapport de teneur de la charge de la première couche de formation de film est différent du rapport de teneur de la charge de la deuxième couche de formation de film et le facteur de gravure de la deuxième couche de formation de film est différent de celui de la première couche de formation de film.

2. Feuille verte selon la revendication 1, comprenant en outre un film de protection formé sur la deuxième couche de formation de film.

3. Feuille verte selon la revendication 1, dans laquelle la première ou la deuxième couche de formation de film comprend en outre moins de 2 % en poids d'un agent anti-mousse, moins de 2 % en poids d'un agent d'écoulement et moins de 1 % en poids d'un solvant.

4. Feuille verte selon la revendication 1, dans laquelle la charge en est au moins une choisie parmi le groupe consistant en ZnO, Al₂O₃ et TiO₂.

5. Feuille verte selon la revendication 1, dans laquelle le liant en est au moins un choisi parmi le groupe consistant en un matériau à base de cellulose, un matériau à base de vinyle, un matériau à base de méthacryle, un matériau à base d'acryle et un mélange de ceux-ci.

6. Feuille verte selon la revendication 1, dans laquelle le plastifiant en est au moins un choisi parmi le groupe consistant en un matériau à base de phtalate, un matériau à base de glycol, un matériau à base d'azélate et un mélange de ceux-ci.
